# EUROPEAN PATENT APPLICATION

(11) **EP 2 098 991 A1**
(43) Date of publication of application: **09.09.2009**
(21) Application number: 08102325.1
(22) Date of filing: 06.03.2008
(51) Int. Cl.: G06T 7/00

(54) **Method of registering and displaying medical images**

(71) Applicant: Agfa HealthCare NV, 2640 Mortsel (BE)
(72) Inventor: Cant, Jeroen, 2640, Mortsel (BE)

(57) **Abstract**

Medical image studies acquired at different moments in time or acquired by means of different imaging modalities are registered and displayed. A local rigid transformation transforming pixels/voxels within a region of interest in study A into a corresponding region in study B is calculated and this transformation is applied to substantially all pixels/voxels of the first study A. Transformed image study A and image study B are displayed in a juxtaposed or a superposed position.

## Description

### FIELD OF THE INVENTION

The present invention is in the field of medical imaging.
The present invention relates to a method of detecting changes in medical images of a patient acquired at different times or with different modalities.

### BACKGROUND OF THE INVENTION

Comparison of different imaging studies (further called "studies") of a patient is usually performed on studies acquired at different moments in time to follow up the evolution of a pathology.
In the context of the present invention a study is a set of measurement values determine at different locations within a patient's body in order to form an image of the body. Examples are a set of CT slices, a computed radiography (CR) or direct radiography (DR) image.
For example a comparison of different studies of the patient acquired by means of computed tomography technique at different moments in time is made e.g. to follow up tumor growth. Alternatively studies acquired with different modalities may be compared in order to enable the use of complementary information of both studies such as CT and MR comparison, CT and PET comparison etc.

In order to enable such comparison the digital signal representations of studies acquired at different moments in time or studies acquired by different modalities are registered and applied to a display device to allow visual inspection.

A registration makes sure that the application visualizes the same anatomical location in both studies in order to facilitate comparison.

Visualisation of registered studies is usually performed by displaying a visualization of the registered studies side by side or by overlaying the visualization of one study on top of the other using a blending technique known in the state of the art.

Known registration methods can be subdivided into global rigid registration methods and non-rigid registration methods.

Global rigid registration methods involve rotation and translation of one study in order to achieve registration with another study.

Non-rigid registration comprises a spatial deformation of astudy in order to obtain a better match with another study. The applied deformations depend on the location of the imaged part in the body to compensate for possible movements and expansions of body parts in between the generation of different study. For example studies of liver, kidneys, lungs etc. may suffer from these deformations and expansions.

State of the art global registration does not provide a satisfactory result for all body parts at the same time. For example in case two studies of the skeleton are registered well by rotating and translating the whole body image as a rigid structure, it is still possible that another structure present in the study, for example the kidneys do not match perfectly due to the dynamic nature of the intestines, their location and form changes due to the breathing of the patient.
On the other hand, in a global non-rigid registration one of the two studies needs to be deformed to match the other study. As a consequence of this deformation the original diagnostic image of the study is changed thereby possibly introducing image artifacts that are not of pathological origin.
An additional drawback of this method is the fact that the physician cannot see the original image of the patient (as it was at the time of image capture) because it is deformed due to the non-rigid registration.

### SUMMARY OF THE INVENTION

The above-mentioned aspects are realised by a method having the specific features set out in claim 1. Specific features for preferred embodiments of the invention are set out in the dependent claims.
Further advantages and embodiments of the present invention will become apparent from the following detailed description.

### DETAILED DESCRIPTION OF THE INVENTION

According to the method of the present invention a region of interest is indicated in a first study A, for example a study taken at a time T1.
Next a rigid transformation is calculated transforming pixels within said region of interest in study A into a corresponding region in a study B, which is for example a study of the same patient taken at a later moment in time T2.
This transformation which is calculated on the basis of the pixels or voxels within the determined region of interest is then applied to substantially all pixels or voxels of the first study.
Next study B and transformed study A are displayed.

The digital signal representation of the pixels or voxels of the studies can be obtained by an image acquisition technique such as CT, MR, PET, SPECT, CR, DR, ... etc.

The studies can be displayed in a juxtaposed position or they can be displayed in a superposed, blended position.

The method of the present invention is advantageous in that the registration is significantly improved in the region of interest whereas in other regions which are diagnostically less relevant the registration might stay incorrect.

The registration transformation can be computed by an optimization algorithm, which searches the transformation providing maximal quality of registration in the region of interest, whereby the quality of registration outside this region of interest is neglected or given a lower importance. An example of such a quality of registration measure is the mutual information between the corresponding pixel or voxel values of both studies after applying the registration transformation.

A prior registration is assumed to have occurred, prior to indicating the region that should be registered using local rigid registration. This prior registration provides the initial transformation from anatomical locations in study A to anatomical locations in study B.
In case no prior registration is present, as prior registration e.g. a simple transformation could be used that aligns the mass centers and principal axisses of the studies.
Another example of a prior registration is a global rigid registration, or a previous local rigid registration.

The selection of the region of interest comprising the pixels or voxels that are to be registered by means of local rigid registration can be performed in several ways. Various alternatives of these methods are explained below.

In a first embodiment, in case the imaging studies represent information of the patient in 3 dimensions (such as e.g. CT, MR and PET studies), the center of this region is navigated to in a MPR view (multi planar reformatted view) of one of the two studies and a circle is drawn around the center of this region.
A sphere can thus be derived based on the indicated center and the radius of the circle. This provides a boundary for the region in which the local rigid registration is to be applied to the voxels.

In another version a fused MPR image of the studies obtained by means of priori registration is displayed and e.g. a circle is defined around a center point.

Another type of two dimensional region can be drawn around the center such as a square, ... and a 3 dimensional shape (spherical region, cubical region etc.) can be derived from the two dimensional region.

In another embodiment, in case the imaging studies represent information of the patient in 3 dimensions (such as e.g. CT, MR and PET studies), a similar method can be applied to the original slices of a study instead of to the MPR view.
In general, in case the imaging studies represent information of the patient in 3 dimensions (such as e.g. CT, MR and PET studies), a region is indicated in a volume rendered image or a MIP image by drawing a 3D region.

In another embodiment, in case the imaging studies represent information of the patient in 2 dimensions (such as e.g. CR, DR studies), a circle or other two dimensional region can be drawn around the center of the region to apply local rigid registration. In this case, the local rigid registration will be a rigid transformation in two dimensions.

In another embodiment the position of the center for local rigid registration can be retrieved from memory or from a previously stored report that was created for a dataset pertaining to one of the images.
Such a report can for example store the location of a suspicious finding in a volume. The location of this finding can then be used as the center of the local registration. The region of interest in which local rigid registration is performed can then be derived automatically from this center and a heuristic method to determine the boundaries of the region around this center.

It is also possible that a region of interest is determined by a segmentation process. For example the liver region can be indicated by segmentation and a region for local rigid registration can be derived from this segmentation result. This region can also be enlarged or shrinked on the basis of a heuristic method.■

## Claims

1. Method of displaying medical image studies acquired at a different moment in time or acquired by means of different imaging modalities comprising the steps of
- indicating a region of interest in a first study A,
- determining a rigid transformation transforming pixels within said region of interest in study A into a corresponding region in study B,
- apply said transformation to substantially all pixels or voxels of said first study,
- display study B and transformed study A.

2. A method according to claim 1 wherein study B and transformed study A are displayed in a juxtaposed position.

3. A method according to claim 1 wherein study B and transformed study A are displayed in a superposed, blended position.

4. A method according to claim 1 wherein said image studies represent 3D information and said region of interest is determined by defining a center location in an MPR view of at least one study or in a display of the original slice images of said study and by drawing a 2D shape around said center location and deriving a 3D shape from said 2D shape.

5. A method according to claim 1 wherein the location of a center point used for determining said region of interest is retrieved from a previously stored report.

6. A method according to claim 1 wherein said region of interest is determined by a segmentation process.
